# EUROPÄISCHE PATENTSCHRIFT

(11) **EP 2 629 936 B1**
(45) Veröffentlichungstag und Bekanntmachung des Hinweises auf die Patenterteilung: **18.11.2015**
(21) Anmeldenummer: 12790538.8
(22) Anmeldetag: 20.11.2012
(51) Int. Cl.: B23Q 1/00, B25B 5/00

(54) **NULLPUNKTSPANNSYSTEM**
ZERO-POINT CLAMPING SYSTEM
SYSTÈME DE SERRAGE À POINT ZÉRO

(30) Priorität: 22.11.2011 DE 102011086853
(43) Veröffentlichungstag der Anmeldung: 28.08.2013
(73) Patentinhaber: Sanwald, Marcel, 73457 Lorch (DE)
(72) Erfinder: Sanwald, Marcel, 73457 Lorch (DE)
(74) Vertreter: Schmid, Wolfgang
(86) Internationale Anmeldenummer: PCT/EP2012/073104
(87) Internationale Veröffentlichungsnummer: WO 2013/076078

(56) Entgegenhaltungen:
- EP-A1- 0 922 529
- WO-A1-2004/091850

## Beschreibung

Die Erfindung betrifft ein Nullpunktspannsystem, insbesondere für eine Werkzeugmaschine, mit mehreren Plattenelementen, nach der im Oberbegriff von Anspruch 1 näher definierten Art. Des Weiteren betrifft die Erfindung ein Verfahren zum Erzeugen eines Nullpunktspannsystems.

Ein gattungsgemäßes Nullpunktspannsystem ist aus der DE 199 17 146 B4 bekannt. Dabei sind in einem Plattenelement mehrere Spannbolzen angeordnet, die mittels hydraulischem Druck in ihre Spannlage gebracht werden können, um eine daran angebrachte Spannvorrichtung, wie beispielsweise einen Schraubstock, zu spannen.

Während mit derartigen Nullpunktspannsystemen eine sehr genaue Anordnung der Spannvorrichtung auf dem Werkzeugtisch oder dergleichen möglich ist, sind diese bekannten Nullpunktspannsysteme nur für eine kleine Anzahl an Bauteilen oder von ihrer Größe eher kleinen Bauteilen bzw. Werkstücken geeignet.

Zwar ist in der DE 199 17 146 B4 beschrieben, dass durch Verbinden der einzelnen Plattenelemente, beispielsweise mittels Nutenspannern, ein regelmäßiges Raster solcher Plattenelemente auf dem Maschinentisch bereitgestellt werden kann, nachteilig ist dabei jedoch, dass jedes Plattenelement separat mit Hydraulikmedium versorgt werden muss, so dass zum Einen ein sehr hoher Steuerungsaufwand erforderlich ist, und zum Anderen nicht mehr als zwei Reihen von Plattenelementen aneinandergefügt werden können, da ansonsten ein mittleres Plattenelement nicht mit Hydraulikmedium versorgt werden kann.

Aus der DE 41 21 141 A1 ist eine Spannvorrichtung bekannt, die eine Spannplatte mit mehreren, verteilt über die Oberfläche derselben angeordneten Rasterbohrungen aufweist. In den Rasterbohrungen können verschiedene Spanneinsätze gespannt werden.

Aus der WO 2004/091850 A1 ist ein Nullpunktspannsystem gemäß dem Oberbegriff von Anspruch 1 bekannt.

Es ist daher Aufgabe der vorliegenden Erfindung, ein Nullpunktspannsystem zu schaffen, das eine beliebige Größe aufweist und ein schnelles und exaktes Spannen von Bauteilen erlaubt.

Erfindungsgemäß wird diese Aufgabe durch die in Anspruch 1 genannten Merkmale gelöst.

Durch die erfindungsgemäß an sämtlichen Seitenflächen von wenigstens einem der Plattenelemente vorgesehenen Hydraulikanschlüsse ist es möglich, die Hydraulikleitungen der einzelnen Plattenelemente miteinander zu verbinden, wodurch ein Nullpunktspannsystem gebildet werden kann, das im Prinzip jede beliebige Größe und annähernd jede beliebige Geometrie aufweisen kann. Insbesondere ist es mit dem erfindungsgemäßen Nullpunktspannsystem möglich, die Fixierelemente sämtlicher Plattenelemente gleichzeitig zu spannen, wodurch beliebige Spannvorrichtungen auf dem Nullpunktspannsystem angebracht und gespannt werden können. Ein weiterer großer Vorteil der erfindungsgemäßen Lösung besteht in der geschlossenen Fläche, die durch das Verbinden der einzelnen Plattenelemente hergestellt werden kann, da die Seitenflächen im verbundenen Zustand der Plattenelemente aneinander anliegen.

Im Gegensatz zu bekannten Lösungen kann mit dem erfindungsgemäßen Nullpunktspannsystem auch ein mittleres, d. h. an allen Seiten von anderen Plattemelementen umgebenes Plattenelement gespannt werden, da es durch die an sämtlichen seiner Seitenflächen angebrachten Hydraulikanschlüsse mit jedem es umgebenden Plattenelement hydraulisch verbunden werden kann.

Mit dem erfindungsgemäßen Nullpunktspannsystem können gegenüber herkömmlichen Spannsystemen erheblich verringerte Rüstzeiten erreicht werden, was enorme Zeit- und damit Kosteneinsparungen mit sich bringt. Dadurch amortisieren sich die Kosten für die Investition in ein solches Nullpunktspannsystem in den meisten Fällen bereits im ersten Jahr seiner Nutzung.

Wenn in einer vorteilhaften Ausgestaltung der Erfindung vorgesehen ist, dass jedes Plattenelement an sämtlichen seiner Seitenflächen einen jeweiligen Hydraulikanschluss aufweist, so sind zum Einen sämtliche Plattenelemente identisch ausgeführt, was deren Fertigung erheblich vereinfacht. Zum Anderen ist es auf diese Weise möglich, das Hydraulikmedium über ein beliebiges der Plattenelemente in das Nullpunktspannsystem einzubringen. Außerdem kann bei einer solchen Ausgestaltung jedes Plattenelement an einer beliebigen Stelle innerhalb des Nullpunktspannsystems eingesetzt werden.

Um den Verlust von Hydraulikmedium beim Montieren und Demontieren der Plattenelemente zu verhindern und die Dichtheit des erfindungsgemäßen Nullpunktspannsystems zu erhöhen, kann in einer weiteren vorteilhaften Ausgestaltung der Erfindung vorgesehen sein, dass jedem Hydraulikanschluss ein in das jeweilige Plattenelement integriertes, ein Verschließelement aufweisendes Ventil zum Verschließen und Freigeben des Hydraulikanschlusses nachgeschaltet ist.

Ein einfaches und zuverlässiges Verschließen des Ventils ergibt sich, wenn in einer vorteilhaften Weiterbildung der Erfindung das Verschließelement im geschlossenen Zustand des Ventils mittels eines Federelements an ein Dichtelement gedrückt wird.

Des Weiteren kann vorgesehen sein, dass das Verschließelement so gegenüber dem Dichtelement angeordnet ist, dass es im geschlossenen Zustand des Ventils über die jeweilige Seitenfläche übersteht. Auf diese Weise kann eine sehr einfache Freigabe des Ventils erreicht werden, da, wenn die einzelnen Plattenelemente an ihren Seitenflächen aneinandergefügt werden, die Verschließelemente sich gegenseitig von den Dichtelementen wegdrücken, wodurch die Verbindung zwischen den Hydraulikleitungen der benachbarten Plattenelemente hergestellt wird.

In einer weiteren vorteilhaften Ausgestaltung der Erfindung kann vorgesehen sein, dass das Fixierelement eine umlaufende Aussparung aufweist, in welche im gespannten Zustand des Fixierelements ein Vorsprung des hydraulischen Spannelements eingreift. Dadurch ergibt sich eine sehr sichere Zentrierung der Fixierelemente mittels der hydraulischen Spannelemente.

Um eine zuverlässige Spannung und gleichzeitig eine zuverlässige Freigabe des hydraulischen Spannelements und somit des Fixierelements zu gewährleisten, kann in einer sehr vorteilhaften Weiterbildung der Erfindung vorgesehen sein, dass das hydraulische Spannelement mittels eines über die Hydraulikleitung mit Druck beaufschlagbaren Kolbens verschieblich ist, wobei der Kolben mittels eines Federelements in die Stellung bringbar ist, in der das hydraulische Spannelement das Fixierelement freigibt. Dabei ermöglicht das Federelement eine sehr einfach wirkende Rückstellmöglichkeit für das hydraulische Spannelement, um das Fixierelement freizugeben.

Eine weitere vorteilhafte Ausgestaltung der Erfindung kann darin bestehen, dass der Kolben in einem sich an die Hydraulikleitung anschließenden Zylinder angeordnet ist, welcher mittels einer Verschlussschraube verschließbar ist, wobei die Verschlussschraube ein Anschlagelement für den Kolben aufweist. Durch das Anschlagelement bildet die Verschlussschraube gleichzeitig eine Anschlagschraube zum Herstellen einer definierten Position des hydraulischen Spannelements in seiner geöffneten Stellung. Des Weiteren stellt die Verschlussschraube auch eine Montagehilfe dar.

Wenn in einer weiteren vorteilhaften Ausgestaltung der Erfindung eine Hydrauliksteuereinrichtung vorgesehen ist, welche über eine Steuerung einer Zerspanungsmaschine steuerbar oder in die Steuerung einer Zerspanungsmaschine integriert ist, so kann das erfindungsgemäße Nullpunktspannsystem über die Zerspanungs- oder Werkzeugmaschine, auf der es üblicherweise angeordnet ist, gesteuert werden.

Um eine einfache Anbringung des erfindungsgemäßen Nullpunktspannsystems auf einer Werkzeug- bzw. Zerspanungsmaschine zu erreichen, kann in einer weiteren vorteilhaften Ausgestaltung der Erfindung vorgesehen sein, dass die Plattenelemente auf einer mit einem Werkzeugtisch einer Zerspanungsmaschine verbundenen Zwischenplatte angebracht sind.

Eine weitere Ausgestaltung der Erfindung kann darin bestehen, dass auf einem oder mehreren der Plattenelemente eine Spannvorrichtung angebracht ist. Mittels einer solchen Spannvorrichtung, die gegebenenfalls auch über die Hydraulik des Nullpunktspannsystems betätigt werden kann, ist ein einfaches Spannen im Prinzip beliebiger Werkstücke möglich.

Ein Verfahren zum Erzeugen eines Nullpunktspannsystems ist in Anspruch 12 angegeben. Mit diesem Verfahren kann das erfindungsgemäße Nullpunktspannsystem sehr einfach erzeugt und betrieben werden.

Nachfolgend ist ein Ausführungsbeispiel der Erfindung anhand der Zeichnung prinzipmäßig dargestellt.

Es zeigt:
- Fig. 1: eine Draufsicht auf ein erfindungsgemäßes Nullpunktspannsystem;
- Fig. 2: eine vergrößerte Darstellung einer ersten Ausführungsform eines Plattenelements des erfindungsgemäßen Nullpunktspannsystems aus Fig. 1;
- Fig. 3: einen Schnitt nach der Linie III-III aus Fig. 2 mit dem hydraulischen Spannelement in einer ersten Position;
- Fig. 4: eine Darstellung gemäß Fig. 3 mit dem hydraulischen Spannelement in einer zweiten Position;
- Fig. 5: eine erste Stellung bei der Montage zweier Plattenelemente;
- Fig. 6: eine zweite Stellung bei der Montage zweier Plattenelemente;
- Fig. 7: eine dritte Stellung bei der Montage zweier Plattenelemente;
- Fig. 8: eine vierte Stellung bei der Montage zweier Plattenelemente;
- Fig. 9: eine fünfte, vollständig montierte Stellung bei der Montage zweier Plattenelemente;
- Fig. 10: eine zweite Ausführungsform eines Plattenelements des erfindungsgemäßen Nullpunktspannsystems;
- Fig. 11: einen Schnittansicht des Plattenelements aus Fig. 10 mit dem hydraulischen Spannelement in einer ersten Position;
- Fig. 12: eine Darstellung gemäß Fig. 11 mit dem hydraulischen Spannelement in einer zweiten Position;
- Fig. 13: eine Darstellung gemäß Fig. 11 mit dem hydraulischen Spannelement in einer dritten Position;
- Fig. 14: eine Darstellung gemäß Fig. 11 mit dem hydraulischen Spannelement in einer vierten Position;
- Fig. 15: eine Darstellung gemäß Fig. 11 mit dem hydraulischen Spannelement in einer fünften Position;
- Fig. 16: eine erste Stellung bei der Montage zweier Plattenelemente einer alternativen Ausführungsform;
- Fig. 17: eine zweite Stellung bei der Montage zweier Plattenelemente der alternativen Ausführungsform;
- Fig. 18: eine dritte Stellung bei der Montage zweier Plattenelemente der alternativen Ausführungsform;
- Fig. 19: eine vierte Stellung bei der Montage zweier Plattenelemente der alternativen Ausführungsform;
- Fig. 20: eine fünfte, vollständig montierte Stellung bei der Montage zweier Plattenelemente;
- Fig. 21: eine weitere Stellung bei der Montage zweier Plattenelemente;
- Fig. 22: eine Seitenansicht einer als Winkel ausgeführten Spannvorrichtung, die mittels des erfindungsgemäßen Nullpunktspannsystems gespannt werden kann;
- Fig. 23: eine Ansicht der Spannvorrichtung gemäß dem Pfeil XXIII aus Fig. 22;
- Fig. 24: eine Ansicht der Spannvorrichtung gemäß dem Pfeil XXIV aus Fig. 22; und
- Fig. 25: eine beispielhafte Ausführungsform der Anbringung des erfindungsgemäßen Nullpunktspannsystems an einem Werkzeugtisch.

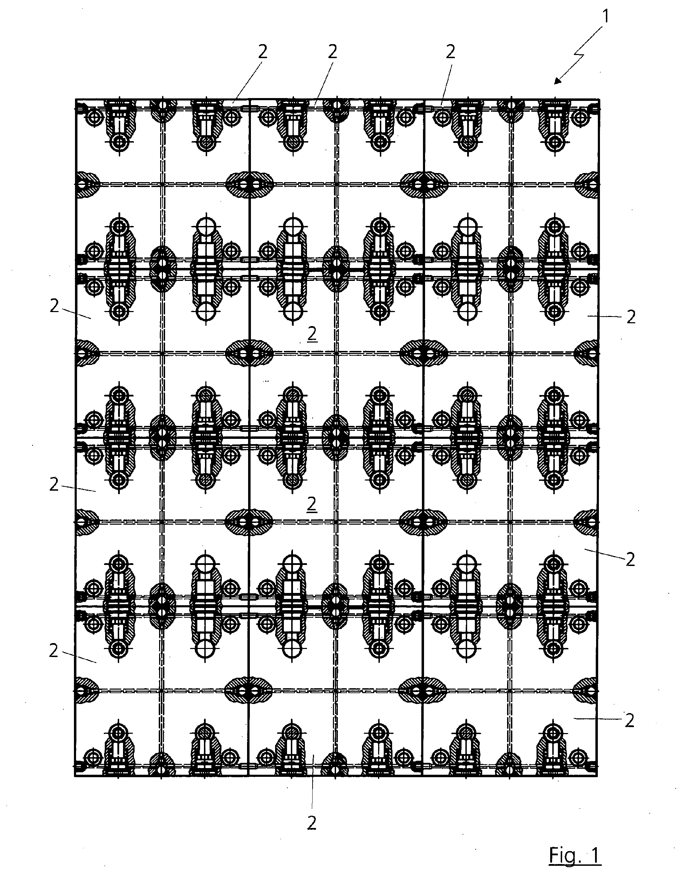

Fig. 1 zeigt ein Nullpunktspannsystem 1, das zum Spannen nicht dargestellter Bauteile, insbesondere Werkstücke, auf einer ebenfalls nicht dargestellten Werkzeugmaschine bzw. Zerspanungsmaschine dient. Das Nullpunktspannsystem 1 weist eine beliebige Anzahl an Plattenelementen 2 auf, die auf eine nachfolgend näher beschriebene Art und Weise hydraulisch miteinander verbunden sind. In der in Fig. 1 dargestellten, beispielhaften Ausführungsform handelt es sich um insgesamt zwölf Plattenelemente 2, die in vier Reihen zu je drei Plattenelementen 2 angeordnet sind. Auf diese Weise ist das Nullpunktspannsystem 1 in der Lage, annähernd beliebige Spannvorrichtungen aufzunehmen, in denen dann die Werkstücke gespannt werden können. Alternativ oder zusätzlich ist es auch möglich, ein oder mehrere Werkstücke mittels Spannpratzen oder anderer geeigneter Spannelemente direkt auf dem Nullpunktspannsystem 1 zu spannen.

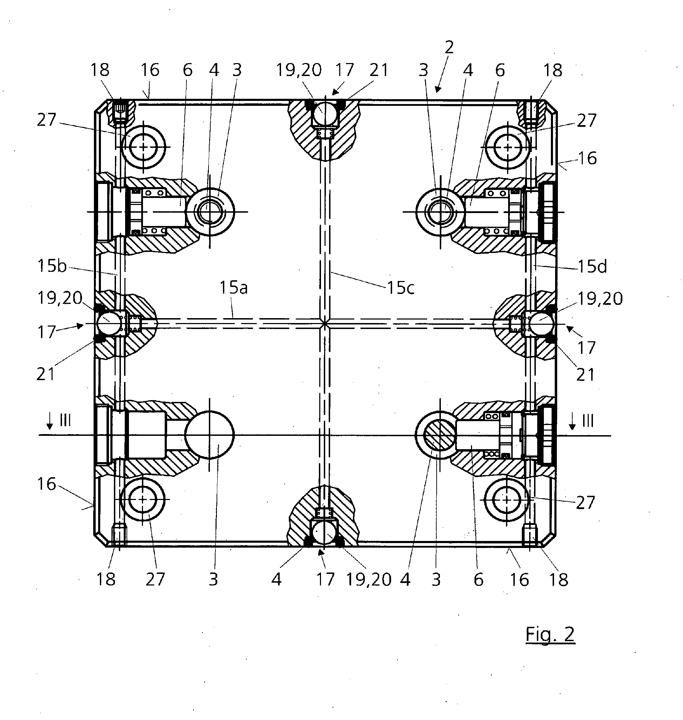

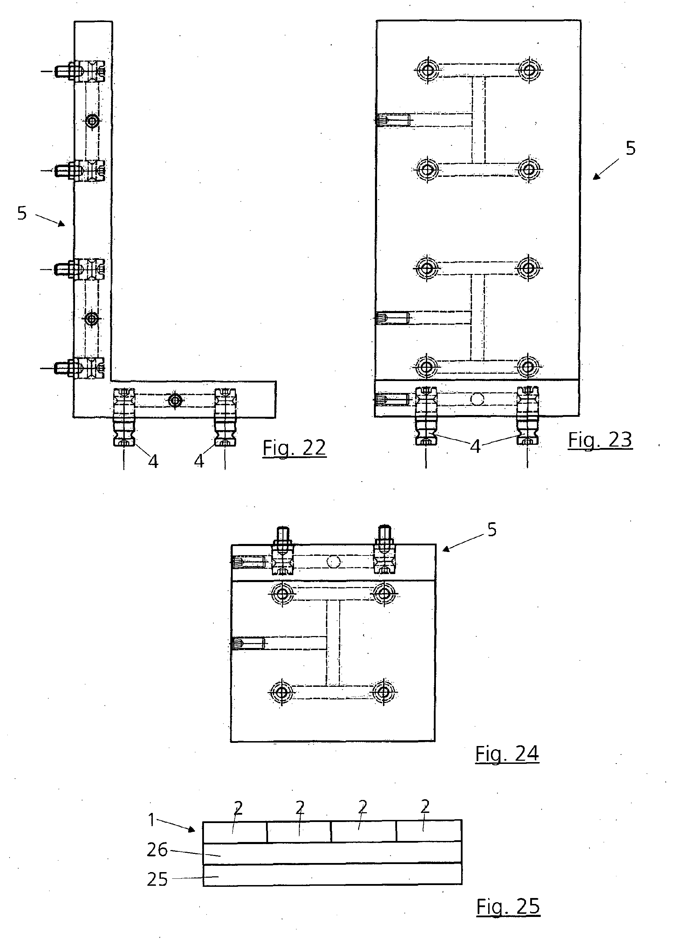

In Fig. 2 ist eines der Plattenelemente 2 detaillierter dargestellt und es ist zu erkennen, dass das Plattenelement 2 wenigstens eine, im vorliegenden Fall vier Aufnahmebohrungen 3 aufweist, die zum Aufnehmen jeweiliger Fixierelemente 4 dienen. Die Fixierelemente 4, die im vorliegenden Fall als Fixierbolzen ausgebildet sind, dienen wiederum zur Verbindung einer beispielsweise in den Figuren 22 bis 24 dargestellten Spannvorrichtung 5 mit dem Nullpunktspannsystem 1. Hierzu werden die Fixierelemente 4, wie zum Beispiel in den Figuren 22 und 23 dargestellt, an der Spannvorrichtung 5 angebracht und anschließend in die Aufnahmebohrungen 3 eingeführt.

Zum Spannen der Fixierelemente 4 in der Aufnahmebohrung 3 und damit zum Fixieren der Fixierelemente 4 an dem jeweiligen Plattenelement 2 und dadurch auch an dem Nullpunktspannsystem 1 dienen jeweilige hydraulische Spannelemente 6, von denen jeweils eines einem jeweiligen Fixierelement 4 zugeordnet ist. Die Fixierelemente 4 und die hydraulischen Spannelemente 6 bestehen vorzugsweise aus gehärtetem Stahl, so dass sie nur einem sehr geringen Verschleiß unterworfen sind. Prinzipiell sind jedoch auch andere Materialien für die Fixierelemente 4 und die hydraulischen Spannelemente 6 verwendbar.

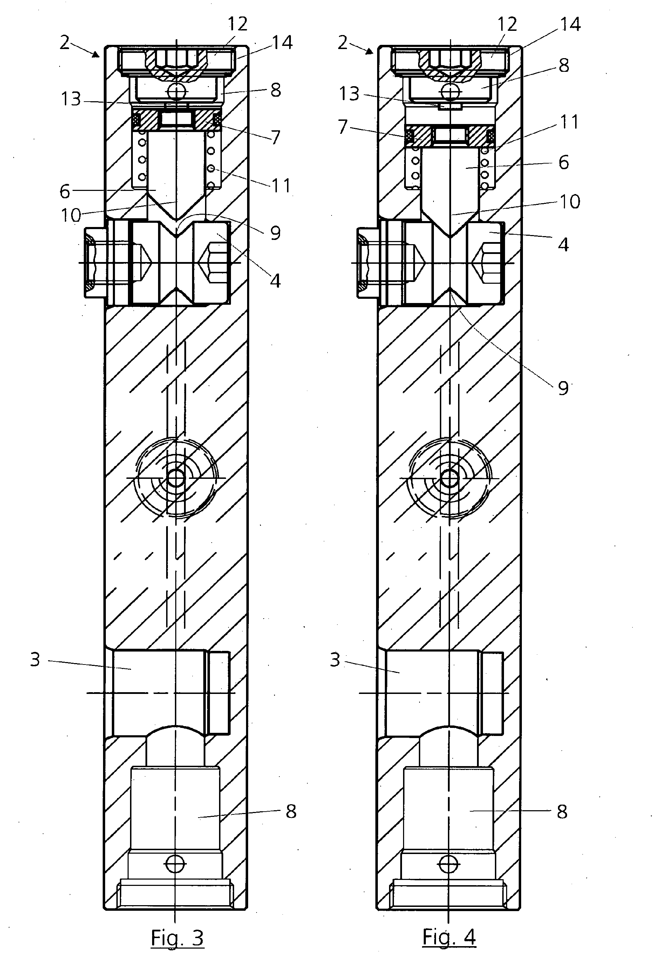

Wie in den Figuren 3 und 4 besser erkennbar ist, wirkt auf das hydraulische Spannelement 6 ein Kolben 7, der in einem Zylinder 8 angeordnet ist und der in der Lage ist, das hydraulische Spannelement 6 von der in Fig. 3 dargestellten Position, in der es nicht mit dem Fixierelement 4 in Eingriff ist, in die in-Fig. 4 dargestellte Lage zu verschieben, in der das hydraulische Spannelement 6 in das Fixierelement 4 eingreift.

Um eine exakte Spannung bzw. Fixierung des Fixierelements 4 zu gewährleisten, weist das Fixierelement 4 eine umlaufende Aussparung 9 auf, in welche in dem gespannten Zustand des Fixierelements 4 gemäß Fig. 4 ein Vorsprung 10 des hydraulischen Spannelements 6 eingreift. Das Fixierelement 4 ist vorzugsweise so angeordnet, dass die umlaufende Aussparung 9 sich geringfügig über der Mittelachse des hydraulischen Spannelements 6 befindet, so dass beim Eingreifen des einteilig mit dem Spannelement 6 ausgebildeten Vorsprungs 10 in die Aussparung 9 das Fixierelement 4 nach unten gezogen und somit gespannt wird.

Zur Rückstellung des hydraulischen Spannelements 6 von seiner-Spannstellung gemäß Fig. 4 in seine Freigabestellung gemäß Fig. 3 dient bei dem dargestellten Ausführungsbeispiel ein das hydraulische Spannelement 6 umgebendes und auf den Kolben 7 wirkendes Federelement 11, das somit der über den Kolben 7 aufgebrachten hydraulischen Kraft entgegenwirkt. Aufgrund des in diesem Bereich verhältnismäßig großzügig zur Verfügung stehenden Bauraums kann das Federelement 11 sehr gut auf die durch dasselbe aufzubringende Kraft ausgelegt werden.

Der Zylinder 8 ist mittels einer Verschlussschraube 12 verschließbar, die gleichzeitig ein Anschlagelement 13 aufweist, an dem der Kolben 7 in der Stellung anliegt, in der das hydraulische Spannelement 6 das Fixierelement 4 freigibt. Die Verschlussschraube 12 ist mittels einer Gewindeverbindung 14 in das Plattenelement 2 eingeschraubt, so dass das Anschlagelement 13 einen Anschlag für den Kolben 7 und damit auch für das hydraulische Spannelement 6 darstellt.

In der unteren Hälfte der Figuren 3 und 4 sind die Aufnahmebohrung 3 und der Zylinder 8 ohne die in der oberen Hälfte eingezeichneten Bauteile dargestellt. Üblicherweise befindet sich jedoch in jeder Aufnahmebohrung 3 ein Fixierelement 4 und in jedem Zylinder 8 ein Kolben 7 sowie eine Verschlussschraube 12. Prinzipiell wäre es jedoch auch möglich, in einzelnen Aufnahmebohrungen 3 keines der Fixierelemente 4 anzuordnen und stattdessen die entsprechende Aufnahmebohrung 3 mittels eines nicht dargestellten Blindstopfens zu verschließen. In diesem Fall wäre auch der zugeordnete Zylinder 8 mittels eines Blindstopfens verschlossen, wozu jedoch auch die Verschlussschraube 12 eingesetzt werden kann. Durch die Blindstopfen wird verhindert, dass Späne oder bei der mechanischen Bearbeitung verwendete Kühl- und Schmierstoffe in die Aufnahmebohrungen 3 eindringen können.

Um die Zylinder 8 mit Hydraulikmedium versorgen zu können, weisen die Plattenelemente 2 mehrere Hydraulikleitungen 15 auf, die jeweils als Tieflochbohrungen ausgeführt sind. In dem Ausführungsbeispiel von Fig. 2 verläuft dabei eine Hydraulikleitung 15a in waagrechter und drei Hydraulikleitungen 15b, 15c und 15d in senkrechter Richtung. Die in waagrechter Richtung verlaufende Hydraulikleitung 15a und die mittlere der in senkrechter Richtung verlaufenden Hydraulikleitungen 15b, 15c, 15d, also die Hydraulikleitung 15c, dienen zur Einleitung des Hydraulikmediums in das Plattenelement 2 und die beiden äußeren, in senkrechter Richtung verlaufenden Hydraulikleitungen 15b und 15d dienen zur Versorgung der jeweiligen Zylinder 8 mit dem Hydraulikmedium. Die Hydraulikleitungen 15b und 15d sind mittels jeweiliger Verschlussstopfen 18 verschlossen, da über dieselben kein Hydraulikmedium eingeleitet wird und sie lediglich zur Versorgung der Zylinder 8 mit Hydraulikmedium dienen.

Um eine beliebige Anzahl an Plattenelementen 2 zu dem Nullpunktspannsystem 1 kombinieren zu können, sind im vorliegenden Fall an sämtlichen Seitenflächen 16 des in der Draufsicht quadratischen Plattenelements 2 jeweilige Hydraulikanschlüsse 17 angeordnet, über welche die Hydraulikleitungen 15 der einzelnen Plattenelemente 2 miteinander verbunden werden können. Prinzipiell wäre es möglich, lediglich eines oder einzelne der Plattenelemente 2 so auszuführen, dass an sämtlichen Seitenflächen 16 ein jeweiliger Hydraulikanschluss 17 vorhanden ist, im Sinne einer günstigeren Fertigung aufgrund der Herstellung von Gleichteilen und einer einfacheren Montage ist es jedoch zu bevorzugen, jedes der Plattenelemente 2 identisch auszuführen, d. h. mit Hydraulikanschlüssen 17 an sämtlichen Seitenflächen 16.

Jedem Hydraulikanschluss 17 ist im vorliegenden Fall ein in das jeweilige Plattenelement 2 integriertes Ventil 19 zum Verschließen und Freigeben des entsprechenden Hydraulikanschlusses 17 zugeordnet bzw. nachgeschaltet. Hierbei weist jedes Ventil 19 ein Verschließelement 20 auf, das in dem dargestellten Ausführungsbeispiel als Kugel ausgebildet ist. Das Verschließelement 20 wird im vorliegenden Fall mittels eines Federelementes 21 gegen ein Dichtelement 22 gepresst, wodurch es in seinem geschlossenen Zustand an dem Dichtelement 22 anliegt, um das Ventil 19 zu verschließen. Durch das Federelement 21 wird also die Geschlossenstellung des Ventils 19 sichergestellt, in der dieses die jeweilige Hydraulikleitung 15a, 15b, 15c oder 15d verschließt.

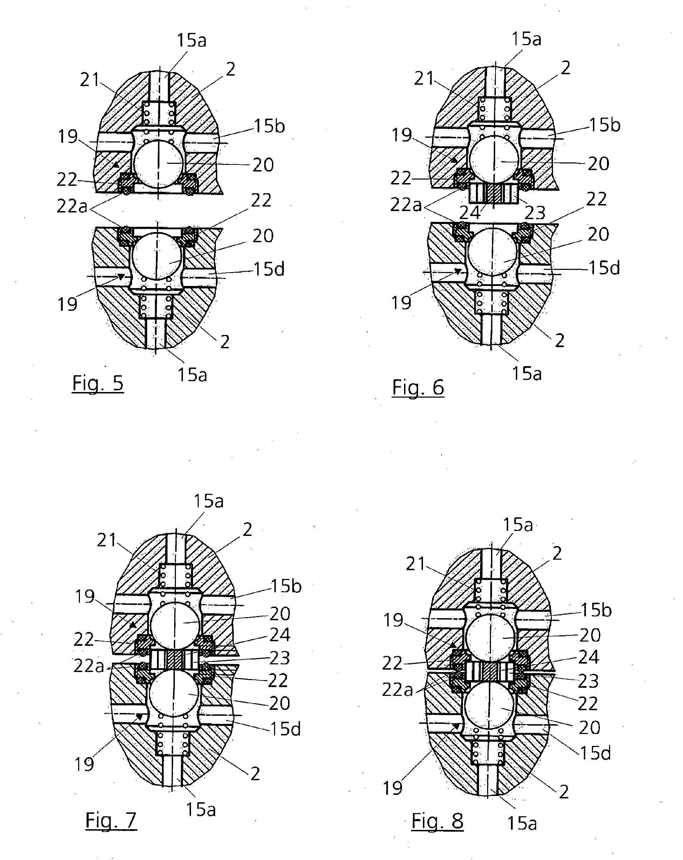

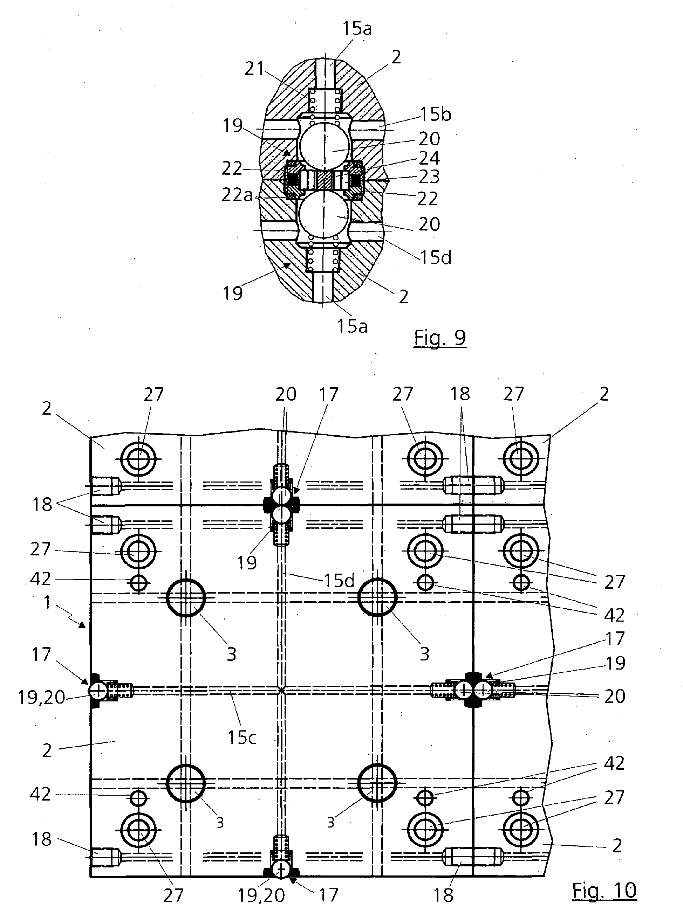

In den Figuren 5 bis 9 ist das Ventil 19 vergrößert dargestellt und es wird anhand mehrerer aufeinanderfolgender Zustände erläutert, wie zwei Plattenelemente 2 miteinander verbunden werden, um eine Verbindung zwischen den Hydraulikleitungen 15a oder 15c zweier Plattenelemente 2 herzustellen. Aus Fig. 5, das den nicht verbundenen Zustand der beiden Plattenelemente 2 zeigt, geht hervor, dass an der äußeren Seite des Dichtelements 22 ein Dichtring 22a angeordnet ist, der in dem verbundenen Zustand der beiden Plattenelemente 2 gemäß Fig. 9 so mit dem anderen Dichtring 22a des anderen Plattenelements 2 verpresst ist, dass eine Dichtigkeit der Verbindung zwischen den beiden Hydraulikleitungen 15a der beiden Plattenelemente 15a sichergestellt ist.

Zum Verbinden der Plattenelemente 2 wird ein Adapter- bzw. Freigabeelement 23 eingesetzt, das in einem Bereich zwischen die beiden Hydraulikanschlüsse 17 der beiden Plattenelemente 2 eingebracht wird. Im vorliegenden Fall weist das Freigabeelement 23 einen Magneten 24 auf, der an dem im vorliegenden Fall aus einem magnetischen Material bestehenden Verschließelement 20 angebracht wird, um die Montage zu erleichtern. Wie aus den Figuren 7 und 8 hervorgeht, werden dann die Plattenelemente 2 aufeinander zugeschoben, wodurch der Magnet 24 des Freigabeelements 23 auch mit dem anderen Verschließelement 20 des anderen Plattenelements 2 Kontakt aufnimmt. Das Freigabeelement 23 sorgt dann dafür, dass die beiden Verschließelemente 20 von den jeweiligen Dichtelementen 22 abgehoben werden, bis schließlich der Zustand gemäß Fig. 9 erreicht wird, in dem sich die einander zugerichteten Seitenflächen 16 der beiden Plattenelemente 2 berühren bzw. aneinander anliegen und auch die Dichtringe 22a, wie oben erläutert, aneinander anliegen bzw. miteinander verpresst sind. Dieser Vorgang kann für jedes der Plattenelemente 2 wiederholt werden, um beispielsweise das in Fig. 1 dargestellte Nullpunktspannsystem 1 mit insgesamt zwölf Plattenelementen 2 zu erzeugen.

Wenn sämtliche Plattenelemente 2 des Nullpunktspannsystems 1 auf diese Weise hydraulisch miteinander verbunden sind, werden im gespannten Zustand sämtliche Fixierelemente 4 in den Aufnahmebohrungen 3 fixiert. Hierzu ist zumindest einer der Hydraulikanschlüsse 17 eines sich am äußeren Rand des Nullpuriktspannsystems 1 befindlichen Plattenelemente 2 mit einer nicht dargestellten zentralen Druckversorgung verbunden, über die der hydraulische Druck bzw. das Hydraulikmedium in das Nullpunktspannsystem 1 eingebracht wird. Dadurch können sämtliche Fixierelemente 4 gleichzeitig gespannt werden. Diejenigen Aufnahmebohrungen 3, in denen sich keine Fixierelemente 4 befinden, können wie oben beschrieben mittels Blindstopfen verschlossen sein und spielen damit für den Spannvorgang keine Rolle. Wenn einzelne Plattenelemente 2 oder auch einzelne der Hydraulikleitungen 15a, 15b, 15c oder 15d nicht hydraulisch miteinander verbunden werden sollen, so ist es möglich, bestimmte Freigabeelemente 23 nicht einzubauen, so dass die entsprechenden Ventile 19 stets verschlossen bleiben.

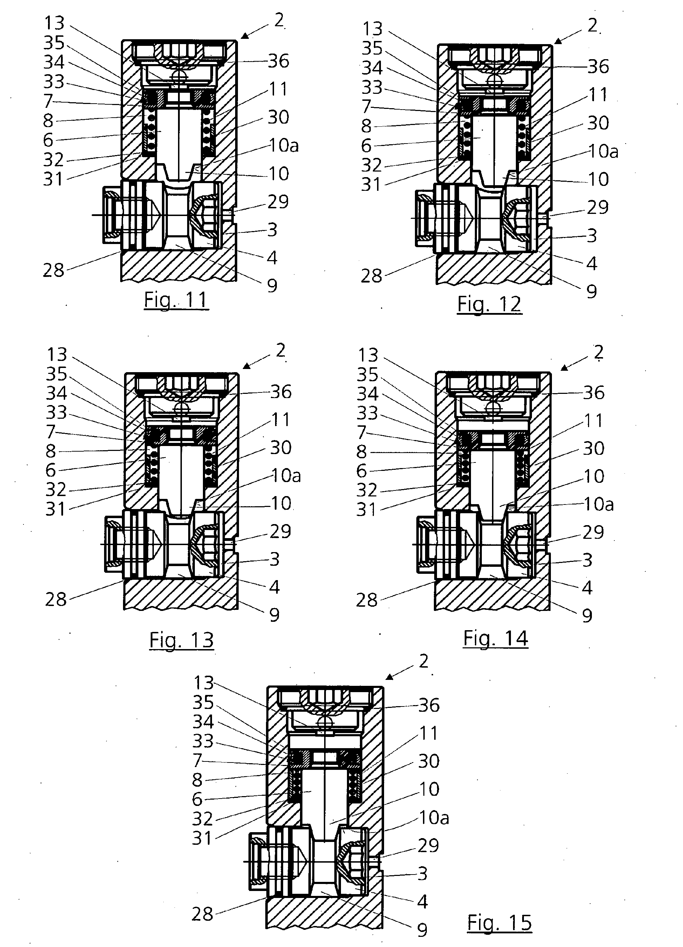

Fig. 10 zeigt eine weitere Ausführungsform des Plattenelements 2 des Nullpunktspannsystems 1. Bei dieser Ausführungsform des Plattenelements 2 sind die Ventile 19 in einer anderen Form als in der oben beschriebenen Ausführungsform ausgebildet. Ein weiterer, in Fig. 10 zwar nicht erkennbarer, aber unter Bezugnahme auf die Figuren 11 - 15 ausführlich beschriebener Unterschied dieser Ausführungsform besteht in der Ausgestaltung des hydraulischen Spannelements 6.

In Fig. 10 ist eines der Plattenelemente 2 vollständig und drei der Plattenelemente 2, die mit dem vollständig dargestellten Plattenelemente 2 verbunden sind, nur teilweise dargestellt. Dabei ist zu erkennen, dass jedes der Plattenelemente 2 nur an zwei der Dichtelemente 22 den außen angebrachten Dichtring 22a aufweist, wohingegen an zwei Dichtelementen 22 der Dichtring 22a nicht vorhanden ist. Dadurch wird eine Möglichkeit geschaffen, bei der Montage der Plattenelemente 2 stets zwei Seitenflächen 16 zusammenzubringen, von denen ein Ventil 19 den äußeren Dichtring 22a aufweist und das andere Ventil den äußeren Dichtring 22a nicht aufweist, so dass, entsprechende Sorgfalt bei der Montage vorausgesetzt, der Fall nie eintreten kann, dass zwei Seitenflächen 16 von zwei Plattenelementen 2 miteinander verbunden werden, an denen jeweils ein Dichtring 22a vorgesehen ist. Dadurch werden Beschädigungen der Dichtringe 22a vermieden.

In den Figuren 11 bis 15 ist diese als Alternative zu der Ausführungsform der Figuren 3 und 4 anzusehende Ausführungsform des hydraulischen Spannelements 6 sowie des zugehörigen Fixierelements 4 jedoch anhand unterschiedlicher Positionen des hydraulischen Spannelements 6 und des Fixierelements 4, die sich bei der Bewegung des hydraulischen Spannelements 6 gegenüber dem Fixierelement 4 ergeben, dargestellt. Diejenigen Teile des hydraulischen Spannelements 6 und des Fixierelements 4 sowie der zugehörigen bzw. diese umgebenden Bauteile werden unter Bezugnahme auf die Figuren 11 bis 15 jedoch nicht ausführlich beschrieben. So ist erkennbar, dass das Fixierelement 4 an seiner der Oberfläche des Plattenelements 2 zugewandten Seite ein Dichtelement 28 aufweist, das als in einer Nut des Fixierelements 4 angeordneter Dichtring ausgebildet ist. Dieses Dichtelement 28 verhindert das Eindringen von Spänen oder bei der mechanischen Bearbeitung verwendeten Kühl- und Schmierstoffen in die Aufnahmebohrung 3, in der sich das Fixierelement 4 befindet. Aufgrund des Dichtelements 28 ist es möglicherweise erforderlich, beim Einführen des Fixierelements 4 in die Aufnahmebohrung 3 das Fixierelement 4 von Hand geringfügig tiefer in die Aufnahmebohrung 3 zu drücken, um dasselbe in eine Position zu bringen, in welcher der Vorsprung 10 des hydraulischen Spannelements 6 in der Lage ist, in die Aussparung 9 des Fixierelements 4 einzugreifen. Gegebenenfalls kann dies jedoch auch durch das Gewicht eines auf dem Nullpunktspannsystem 1 gespannten Werkstücks erreicht werden. An der Unterseite der Aufnahmebohrung 3 weist diese eine zusätzliche Durchgangsbohrung 29 auf, durch welche gegebenenfalls in die Aufnahmebohrung 3 eingedrungenes Kühl- und Schmiermedium aus derselben austreten kann.

Des Weiteren ist in den Figuren 11 bis 15 erkennbar, dass der Vorsprung 10 des hydraulischen Spannelements 6 nicht wie bei der Ausführungsform der Figuren 3 und 4 spitz, sondern stufenförmig ausgebildet ist. Dadurch kann ein steilerer Winkel der Flanken 10a des Vorsprungs 10 erreicht werden, wodurch sich ein anderes Übersetzungsverhältnis bezüglich der auf das Fixierelement 4 aufgebrachten Kraft ergibt, sodass beim Spannen des Fixierelements 4 durch das hydraulische Spannelement 6 eine größere Kraft aufgebracht werden kann bzw. mit einer geringeren auf das hydraulische Spannelement 6 wirkenden Kraft eine größere Spannkraft auf das Fixierelement 4 aufgebracht werden kann als dies bei der Ausführungsform gemäß der Figuren 3 und 4 der Fall ist. Auch die umlaufende Aussparung 9 des Fixierelements 4 ist selbstverständlich an die geänderte Form des Vorsprungs 10 angepasst, wie beispielsweise in Fig. 15 sehr gut erkennbar ist. Aus Fig. 15 geht auch hervor, dass im vollständig gespannten Zustand des Fixierelements 4 das hydraulische Spannelement 6 an den Schrägflächen der Aussparung 9 des Fixierelements 4 anliegt, sodass eine sichere Spannung des Fixierelements 4 mit hohen Spannkräften erreicht werden kann.

Aus den Figuren 11 bis 15 geht außerdem hervor, dass in dem Zylinder 8, in dem der Kolben 7 verschieblich geführt ist, ein im vorliegenden Fall in Form einer Hülse ausgeführtes Anschlagselement 30 angeordnet ist, welches die Bewegung des Kolbens 7 in dem Zylinder 8 begrenzt und damit verhindert, dass das Federelement 11 auf Block fahren und möglicherweise beschädigt werden kann. Auf der dem Fixierelement 4 zugewandten Seite des Zylinders 8 ist ein Abstreifer 31 vorgesehen, der beispielsweise aus einem geeigneten Kunststoff bestehen kann und eine Art Dichtung gegenüber dem hydraulischen Spannelement 6 dargestellt und das Eindringen von Schmutz verhindert. Auf dem Abstreifer 31, d. h. zwischen dem Abstreifer 31 und dem Anschlagelement 30, befindet sich eine Scheibe 32, die beispielsweise aus Stahl bestehen kann und die eine Beschädigung des Abstreifers 31 durch das Anschlagelement 30 verhindert, indem sie die von dem Anschlagelement 30 möglicherweise ausgehende Kraft verteilt.

Des Weiteren ist in den Figuren 11 bis 15 erkennbar, dass der Kolben 7 mittels einer zweiteiligen Dichtungseinrichtung 33 gegenüber dem Zylinder 8 abgedichtet ist. Die Dichtungseinrichtung 33 weist einen äußeren Dichtring 34 und einen inneren Dichtring 35 auf. Der innere Dichtring 35 besteht dabei vorzugsweise aus einem elastomeren Material, so dass er verpresst werden kann, wohingegen der äußere Dichtring 34 aus einem Lagermaterial, beispielsweise einem Weichmetall oder dergleichen, besteht. Des Weiteren ist die Verschlussschraube 12 mittels eines Dichtrings 36 gegenüber dem Plattenelement 2 abgedichtet.

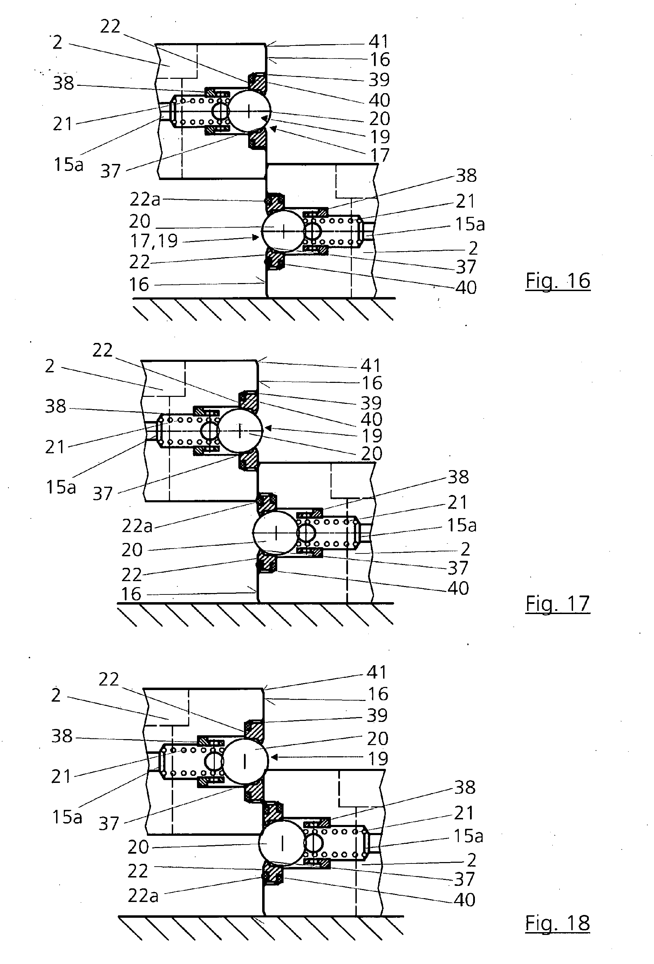

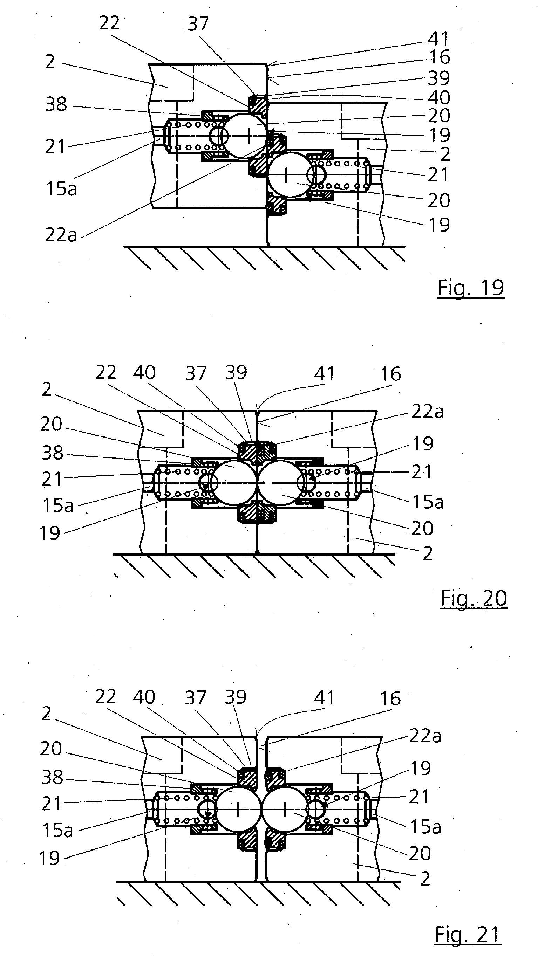

In den Figuren 16 bis 21 ist eine alternative Ausführungsform des Ventils 19 dargestellt. Des Weiteren zeigen die Figuren 16 bis 21, in ähnlicher Weise wie die Figuren 5 bis 9, verschiedene Stellungen bei der Montage zweier Plattenelemente 2 aneinander. Ähnlich wie bei der in den Figuren 5 bis 9 dargestellten Ausführungsform ist das Verschließelement 20 wiederum als Kugel ausgebildet, die, beaufschlagt durch das Federelement 21, an dem Dichtelement 22 anliegt, um die jeweilige Hydraulikleitung 15a oder 15c zu verschließen. Das Dichtelement 22, das beispielsweise aus Aluminium bestehen kann, weist hierzu eine dem Verschließelement 20 zugewandte Dichtkante 37 auf. Auf der dem Dichtelement 22 gegenüberliegenden Seite ist ein Anschlagelement 38 vorgesehen, an dem das Verschließelement 20 in seinem geöffneten Zustand anliegt. Das Dichtelement 22, das mittels einer Gewindeverbindung 39 in das Plattenelement 2 eingeschraubt ist, ist an seiner inneren Seite mittels eines Dichtrings 40 gegenüber dem Plattenelement 2 abgedichtet. Wie insbesondere in dem geschlossenen Zustand des Ventils 19 gemäß Fig. 17 zu erkennen ist, ist das Verschließelement 20 so gegenüber dem Dichtelement 22 angeordnet, dass es im geschlossenen Zustand des Ventils 19 über die jeweilige Seitenfläche 16 des Plattenelements 2 übersteht. Dadurch drücken sich bei dem in den Figuren 16 bis 21 dargestellten Aneinanderlegen zweier Plattenelemente 2 bzw. beim Einfügen eines Plattenelements 2 in eine zwischen mehreren Plattenelementen 2 gebildete Lücke die beiden Verschließelemente 20 gegenseitig von der Dichtkante 37 des Dichtelements 22 weg, wodurch das Ventil 19 geöffnet wird. Dadurch ist unmittelbar nach dem Einführen des Plattenelements 2 in die Lücke bzw. allgemein beim Verbinden zweier Plattenelemente 2 miteinander der hydraulische Kreislauf geschlossen und das eingefügte Plattenelement 2 kann sofort eingesetzt werden.

Aus dem Verlauf der Figuren 16 bis 21 ist erkennbar, dass es bei dieser Ausführungsform des Ventils 19 auch möglich ist, die Plattenelemente2 von oben in eine Lücke zwischen mehreren Plattenelementen 2 einzusetzen. Um das Einsetzen bzw. Einfahren des Plattenelements 2 in eine solche Lücke zu vereinfachen, weist jedes Plattenelement 2 an jeder seiner Außenkanten eine Fase 41 auf, die, wie in Fig. 17 zu erkennen ist, dafür sorgt, dass das Plattenelement 2 über den Dichtring 22a geschoben werden kann, ohne denselben zu beschädigen. Die Fase 41 weist hierzu im vorliegenden Fall einen Winkel von ca. 30° auf, der dafür sorgt, dass das Plattenelement 2 problemlos über den jeweiligen Dichtring 22a geschoben werden kann. Gegebenenfalls könnte die Fase 41 auch einen anderen Winkel aufweisen. Statt der Fase 41 könnte gegebenenfalls auch ein Radius an den Außenkanten der Plattenelemente 2 vorgesehen sein.

Durch diese Möglichkeit, das Plattenelement 2 von oben in eine Lücke zwischen mehreren Plattenelementen 2 einzuschieben, können beispielsweise beschädigte Plattenelemente 2 in einfacher Weise ersetzt werden. Des Weiteren ist es bei der Ausführungsform der Figuren 16 bis 21 möglich, auf das in den Figuren 5 bis 9 eingesetzte Freigabeelement 23 zu verzichten.

Fig. 22 zeigt den Zustand, in dem ein Plattenelement 2 an ein anderes Plattenelement 2 angeschoben und nicht von oben eingeführt wird.

In den Figuren 23, 24 und 25 ist beispielhaft eine in diesem Fall als Winkel ausgeführte Spannvorrichtung 5 dargestellt. Hierbei können die an der Spannvorrichtung 5 angebrachten Fixierelemente 4 in die Aufnahmebohrungen 3 des Plattenelements 2 eingesetzt und, wie oben ausführlich erläutert, gespannt werden. Die Spannvorrichtung 5 weist im vorliegenden Fall ein eigenes Hydrauliksystem auf, mit dem ein an der Spann Spannvorrichtung 5 angebrachtes Werkstück gespannt werden kann. Gegebenenfalls kann die Spannvorrichtung 5 auch über die Hydraulik des Nullpunktspannsystems betätigt werden.

Im dargestellten Ausführungsbeispiel ist die Spannvorrichtung 5 als Winkel ausgeführt. Alternativ dazu können beispielsweise Schraubstöcke, Vakuumplatten, Spanntürme, Pratzenplatten, Paletten oder auch Magnetplatten an dem durch die Plattenelemente 2 gebildeten Nullpunktspannsystem 1 angebracht werden. Hierbei wird die Spannvorrichtung 5 insoweit an das Nullpunktspannsystem 1 angepasst, als das durch die Aufnahmebohrungen 3 erzeugte Raster sich auch in dem Abstand der Fixierelemente 4 an der Spannvorrichtung 5 wiederfinden sollte.

Eine zur Steuerung des Nullpunktspannsystems 1 dienende, nicht dargestellte Hydrauliksteuereinrichtung kann in eine Steuerung der Zerspanungs- bzw. Werkzeugmaschine integriert sein oder sie kann über die Steuerung der Zerspanungsmaschine gesteuert werden. Dadurch kann das Spannen der Werkstücke in die restlichen Prozessabläufe bei der Herstellung derselben integriert werden.

In Fig. 26 ist ein Ausführungsbeispiel der Anbringung des Nullpunktspannsystems 1 auf einem Werkzeugtisch 25 der Zerspanungs- bzw. Werkzeugmaschine dargestellt. Hierbei ist an den nicht dargestellten, jedoch an sich bekannten T-Nuten des Werkzeugtisches 25 eine Zwischenplatte 26 befestigt, an welcher die Plattenelemente 2 angebracht werden. Dabei werden die Plattenelemente 2 mit der Zwischenplatte 26 vorzugsweise verschraubt und verstiftet. Hierzu weisen die Plattenelemente 2 vorzugsweise mehrere, in Fig. 2 dargestellte Bohrungen 27 zur Aufnahme der Schrauben sowie Passbohrungen 42 zur Aufnahme der Passstifte auf. Vorzugsweise werden die Aufnahmebohrungen 3 für die Fixierelemente 4 erst nach der Befestigung der Plattenelemente 2 an der Zwischenplatte 26 eingebracht, so dass das durch die Aufnahmebohrungen 3 erzeugte Raster von der Werkzeugmaschine selbst hergestellt wird, wodurch Fertigungstoleranzen ausgeschlossen werden. Auch eventuelle Maßabweichungen des Werkzeugtisches 25 selbst werden auf diese Weise ausgeglichen, da sich die Werkzeugmaschine ihr Raster der Aufnahmebohrungen 3 selbst erzeugt. Des Weiteren werden auf diese Weise auch eventuelle Fehler an der Spindel der Werkzeugmaschine ausgeglichen bzw. spielen keine Rolle.

Die Zwischenplatte 26 dient dabei lediglich dazu, Beschädigungen an dem Werkzeugtisch 25 zu verhindern. Prinzipiell wäre es auch möglich, die Plattenelemente 2 mit dem Werkzeugtisch 25 zu verbohren oder die Plattenelemente 2 mittels Nutensteinen in den T-Nuten des Werkzeugtisches 25 anzubringen. In diesem Fall ist es jedoch nicht ratsam, die Plattenelemente 2 wieder von dem Werkzeugtisch 25 zu entfernen, da diese anschließend wieder auf sehr aufwändige Art und Weise wieder ausgerichtet werden müssen. In der Zwischenplatte 26 können sich nicht dargestellte Kanäle befinden, um aus den Durchgangsbohrungen 29 der Aufnahmebohrungen 3 austretendes Kühl- und Schmiermedium aufzunehmen.

Die Plattenelemente 2 können beispielsweise Seitenlängen von 200 mm aufweisen, wodurch beispielsweise bei der Größe eines Werkzeugtisches 25 von 800 x 1000 mm insgesamt zwanzig Plattenelemente 2 eingesetzt werden. Im Falle eines Werkzeugtisches 25, dessen Größe nicht durch die Seitenlänge der Plattenelemente 2 teilbar ist, können auch Plattenelemente 2 mit einer von der quadratischen Form abweichenden Form eingesetzt werden, beispielsweise halbe Plattenelemente 2. Dabei können zum Bilden einer homogenen Fläche auch Plattenelemente 2 eingesetzt werden, die keine Hydraulikleitungen aufweisen, d. h. "blinde" Plattenelemente.

Sämtliche hierin beschriebenen Ausführungsformen des Nullpunktspannsystems 1 können beliebig miteinander kombiniert werden, wenn nicht offensichtliche Gründe dagegen sprechen. Insbesondere ist es zum Beispiel möglich, die Ausführungsform der Figuren 3 und 4 mit der Ausführungsform der Figuren 16 bis 21 oder die Ausführungsform der Figuren 5 bis 9 mit der Ausführungsform der Figuren 11 bis 15 zu kombinieren.

## Patentansprüche

1. Nullpunktspannsystem, insbesondere für eine Werkzeugmaschine, mit mehreren Plattenelementen, die jeweils wenigstens eine Aufnahmebohrung zum Aufnehmen von zur Verbindung mit einer Spannvorrichtung dienenden Fixierelement aufweisen, wobei die Fixierelemente mittels jeweiliger hydraulischer Spannelemente in Aufnahmebohrungen der Plattenelemente fixierbar sind, und wobei die hydraulischen Spannelemente über jeweilige Hydraulikleitungen mit Druck beaufschlagbar sind,
**dadurch gekennzeichnet, dass**
wenigstens eines der Plattenelemente (2) an sämtlichen seiner Seitenflächen (16) einen jeweiligen Hydraulikanschluss (17) aufweist, über welchen die Hydraulikleitungen (15a,15b,15c,15d) der einzelnen Plattenelemene (2) miteinander verbindbar sind, wobei die Seitenflächen (16) im verbundenen Zustand der Plattenelemente (2) aneinander anliegen.

2. Nullpunktspannsystem nach Anspruch 1,
**dadurch gekennzeichnet, dass**
jedes Plattenelement an sämtlichen seiner Seitenflächen einen jeweiligen Hydraulikanschluss aufweist.

3. Nullpunktspannsystem nach Anspruch 1 oder 2,
**dadurch gekennzeichnet, dass**
jedem Hydraulikanschluss (17) ein in das jeweilige Plattenelement (2) integriertes, ein Verschließelement (20) aufweisendes Ventil (19) zum Verschließen und Freigeben des Hydraulikanschlusses (17) nachgeschaltet ist.

4. Nullpunktspannsystem nach Anspruch 3,
**dadurch gekennzeichnet, dass**
das Verschließelement (20) im geschlossenen Zustand des Ventils (19) mittels eines Federelements (21) an ein Dichtelement (22) gedrückt wird.

5. Nullpunktspannsystem nach Anspruch 4,
**dadurch gekennzeichnet, dass**
das Verschließelement (20) so gegenüber dem Dichtelement (22) angeordnet ist, dass es im geschlossenen Zustand des Ventils (19) über die jeweilige Seitenfläche (16) übersteht.

6. Nullpunktspannsystem nach einem der Ansprüche 1 bis 5,
**dadurch gekennzeichnet, dass**
das Fixierelement (4) eine umlaufende Aussparung (9) aufweist, in welche im gespannten Zustand des Fixierelements (4) ein Vorsprung des hydraulischen Spannelements (6) eingreift.

7. Nullpunktspannsystem nach einem der Ansprüche 1 bis 6,
**dadurch gekennzeichnet, dass**
das hydraulische Spannelement (6) mittels eines über die Hydraulikleitung (15a,15b,15c,15d) mit Druck beaufschlagbaren Kolbens (7) verschieblich ist, wobei der Kolben (7) mittels eines Federelements (11) in die Stellung bringbar ist, in der das hydraulische Spannelement (6) das Fixierelement (4) freigibt.

8. Nullpunktspannsystem nach einem der Ansprüche 1 bis 7,
**dadurch gekennzeichne**t, dass
der Kolben (7) in einem sich an die Hydraulikleitung (15a,15b,15c,15d) anschließenden Zylinder (8) angeordnet ist, welcher mittels einer Verschlussschraube (12) verschließbar ist, wobei die Verschlussschraube (12) ein Anschlagelement (13) für den Kolben (7) aufweist.

9. Nullpunktspannsystem nach einem der Ansprüche 1 bis 8,
**gekennzeichnet durch**
eine Hydrauliksteuereinrichtung, welche über eine Steuerung einer Zerspanungsmaschine steuerbar oder in die Steuerung einer Zerspanungsmaschine integriert ist.

10. Nullpunktspannsystem nach einem der Ansprüche 1 bis 9,
**dadurch gekennzeichnet, dass**
die Plattenelemente (2) auf einer mit einem Werkzeugtisch (25) einer Zerspanungsmaschine verbundenen Zwischenplatte (26) angebracht sind.

11. Nullpunktspannsystem nach einem der Ansprüche 1 bis 10,
**dadurch gekennzeichnet, dass**
auf einem oder mehreren der Plattenelemente (2) eine Spannvorrichtung (5) angebracht ist.

12. Verfahren zum Erzeugen eines Nullpunktspahnsystems (1), wobei in jeweilige Aufnahmebohrungen (3) von Plattenelementen (2) jeweilige Fixierelemente (4) eingesetzt werden, wobei mehrere Plattenelemente (2) mit ihren Seitenflächen (16) so aneinander angelegt werden, dass an den Seitenflächen (16) der Plattenelemente (2) vorhandene Hydraulikanschlüsse (17) miteinander verbunden werden, um in den Plattenelementen (2) vorhandene Hydraulikleitungen (15a,15b,15c,15d) miteinander zu verbinden, und wobei durch eine gemeinsame Beaufschlagung von den Fixierelementen (4) zugeordneten hydraulischen Spannelementen (6) mit hydraulischem Druck die Fixierelemente (4) aller Plattenelemente (2) gemeinsam gespannt werden.

## Claims

1. Zero-point clamping system, in particular for a machine tool, having a plurality of plate elements which each have at least one receiving bore for receiving fixing elements that serve for connecting to a clamping apparatus, wherein the fixing elements are fixable in receiving bores of the plate elements by means of respective hydraulic clamping elements, and wherein the hydraulic clamping elements are subjectable to pressure via respective hydraulic lines,
**characterized in that**
at least one of the plate elements (2) has, at each of its lateral faces (16), a hydraulic connection (17) via which the hydraulic lines (15a, 15b, 15c, 15d) of the individual plate elements (2) are connectable together, wherein the lateral faces (16) rest against one another in the connected state of the plate elements (2).

2. Zero-point clamping system according to Claim 1,
**characterized in that**
each plate element has a hydraulic connection at each of its lateral faces.

3. Zero-point clamping system according to Claim 1 or 2,
**characterized in that**
a valve (19) for closing and opening the hydraulic connection (17) is connected downstream of the respective hydraulic connection (17), said valve being integrated into each plate element (2) and having a closing element (20).

4. Zero-point clamping system according to Claim 3,
**characterized in that**
the closing element (20) is pressed against a sealing element (22) by means of a spring element (21) in the closed state of the valve (19).

5. Zero-point clamping system according to Claim 4,
**characterized in that**
the closing element (20) is arranged with respect to the sealing element (22) such that, in the closed state of the valve (19), it projects beyond the respective side face (16).

6. Zero-point clamping system according to one of Claims 1 to 5,
**characterized in that**
the fixing element (4) has a circumferential cutout (9) in which a protrusion of the hydraulic clamping element (6) engages in the clamped state of the fixing element (4).

7. Zero-point clamping system according to one of Claims 1 to 6,
**characterized in that**
the hydraulic clamping element (6) is movable by means of a piston (7) that is subjectable to pressure via the hydraulic line (15a, 15b, 15c, 50d), wherein, by means of a spring element (11), the piston (7) is able to be brought into the position in which the hydraulic clamp element (6) releases the fixing element (4).

8. Zero-point clamping system according to one of Claims 1 to 7,
**characterized in that**
the piston (7) is arranged in a cylinder (8) which adjoins the hydraulic line (15a, 15b, 15c, 15d), said cylinder being closable by means of a locking screw (12), wherein the locking screw (12) has a stop element (13) for the piston (7).

9. Zero-point clamping system according to one of Claims 1 to 8,
**characterized by**
a hydraulic control device which is controllable via a controller of a cutting machine or is integrated into the controller of a cutting machine.

10. Zero-point clamping system according to one of Claims 1 to 9,
**characterized in that**
the plate elements (2) are fitted on an intermediate plate (26) connected to a tool table (25) of a cutting machine.

11. Zero-point clamping system according to one of Claims 1 to 10,
**characterized in that**
a clamping apparatus (5) is fitted on one or more of the plate elements (2).

12. Method for producing a zero-point clamping system (1), wherein respective fixing elements (4) are introduced into respective receiving bores (3) in plate elements (2), wherein a plurality of plate elements (2) are placed against one another by way of their lateral faces (16) such that hydraulic connections (17) present at the lateral faces (16) of the plate elements (2) are connected together in order to connect together hydraulic lines (15a, 15b, 15c, 15d) present in the plate elements (2), and wherein the fixing elements (4) of all the plate elements (2) are jointly clamped by hydraulic clamping elements (6) assigned to the fixing elements (4) being jointly subjected to hydraulic pressure.

## Revendications

1. Système de serrage à point zéro pour une machine-outil comportant plusieurs éléments en plaques ayant respectivement au moins un alésage récepteur taraudé pour recevoir un élément de fixation en vue du couplage avec une installation de serrage, dans lequel les éléments de fixation sont agencés pour être fixés dans des alésages récepteurs des éléments en plaques au moyen d'éléments hydrauliques de serrage respectifs, et dans lequel, les éléments hydrauliques de serrage sont agencés pour être alimentés en pression par des conduits hydrauliques correspondants,
**caractérisé en ce que**,
au moins un des éléments en plaques (2) comporte, sur différentes surfaces latérales (16) un raccord hydraulique respectif (17), par lequel les conduits hydrauliques (15a, 15b, 15c, 15d) des éléments en plaques individuels (2) peuvent être interconnectés, dans lequel les surfaces latérales (16) sont en contact entre elles, lorsque les éléments en plaques (2) sont dans l'état interconnecté.

2. Système de serrage à point zéro selon la revendication 1,
**caractérisé en ce que,**
chaque élément en plaque comporte sur diverses surfaces latérales, un raccord hydraulique respectif.

3. Système de serrage à point zéro selon les revendications 1 ou 2,
**caractérisé en ce que**,
à chaque raccord hydraulique respectif (17) est connectée une soupape (19) comportant un élément de fermeture (20) intégrée dans l'élément en plaque (2) correspondant, pour assurer la fermeture et la libération du raccord hydraulique (17).

4. Système de serrage à point zéro selon la revendication 3,
**caractérisé en ce que**,
l'élément de fermeture (20) est appuyé contre un élément de joint (22) par un élément ressort (21), lorsque la soupape (19) est dans l'état de fermeture.

5. Système de serrage à point zéro selon la revendication 4,
**caractérisé en ce que**,
l'élément de fermeture (20) est disposé de telle manière, en face de l'élément de joint (22), que, lorsque la soupape (19) est dans l'état de fermeture, il dépasse la surface latérale (16) correspondante.

6. Système de serrage à point zéro selon l'une des revendications 1 à 5,
**caractérisé en ce que**,
l'élément de fixation (4) présente un évidement périphérique (9) dans lequel, lorsque l'élément de fixation est dans l'état serré, une protubérance de l'élément de serrage hydraulique (6) y est engagée.

7. Système de serrage à point zéro selon l'une des revendications 1 à 6,
**caractérisé en ce que**,
l'élément de serrage hydraulique (6) peut être coulissé au moyen d'un piston (7) alimenté en pression par les conduits hydrauliques (15a, 15b, 15c, 15d), dans lequel le piston (7) peut être amené, au moyen d'un élément ressort (11) dans la position dans laquelle l'élément de serrage hydraulique (6) libère l'élément de fixation (4).

8. Système de serrage à point zéro selon l'une des revendications 1 à 7,
**caractérisé en ce que**,
le piston (7) est logé dans un cylindre (8) connecté aux conduits hydrauliques (15a, 15b, 15c, 15d), pouvant être verrouillé au moyen d'une vis de fermeture (12), la vis de fermeture (12) comportant un élément de butée (13) pour le piston (7).

9. Système de serrage à point zéro selon l'une des revendications 1 à 8,
**caractérisé en ce que**,
une installation de commande hydraulique est agencée pour être soit commandée par l'intermédiaire d'une commande de machine de desserrage soit intégrée dans la commande d'une machine de desserrage.

10. Système de serrage à point zéro selon l'une des revendications 1 à 9,
**caractérisé en ce que**,
les éléments en plaques (2) sont montés sur un plateau intermédiaire (26) couplé à une table de travail (25) d'une machine de desserrage.

11. Système de serrage à point zéro selon l'une des revendications 1 à 10,
**caractérisé en ce que**,
sur un ou plusieurs des éléments en plaques (2) est montée une installation de serrage (5).

12. Procédé pour réaliser un système de serrage à point zéro (1), dans lequel on introduit dans différents alésages récepteurs taraudés (3) d'éléments en plaques (2) des éléments de fixation (4) respectifs, dans lequel plusieurs d'éléments en plaques (2) sont appuyés les uns sur les autres par leurs surfaces latérales (16) de telle manière que les raccords hydrauliques (17) disposés sur les surfaces latérales (16) des éléments en plaques (2) sont interconnectés, et dans lequel, par une alimentation simultanée en pression hydraulique (15a, 15b, 15c, 15d) des éléments de serrage (6) correspondant aux éléments de fixation (4), tous les éléments en plaques (2) sont serrés ensemble.
